(19) Europäisches Patentamt

European Patent Office

Office européen des brevets

(11) Veröffentlichungsnummer: **0 358 851**
**A2**

(12) **EUROPÄISCHE PATENTANMELDUNG**

(21) Anmeldenummer: **89109823.8**

(51) Int. Cl.5: **G02B 7/00 , //B01J3/00**

(22) Anmeldetag: **31.05.89**

(30) Priorität: **12.09.88 DE 8811508 U**

(43) Veröffentlichungstag der Anmeldung:
**21.03.90 Patentblatt 90/12**

(84) Benannte Vertragsstaaten:
**CH DE FR GB IT LI**

(71) Anmelder: **LEYBOLD AKTIENGESELLSCHAFT**
**Bonner Strasse 498**
**D-5000 Köln 51(DE)**

(72) Erfinder: **Contzen, Franz-Peter**
**Erlenweg 69**
**D-5000 Köln 30(DE)**
Erfinder: **Wilmers, Katrin**
**Stahleck 8**
**D-5000 Köln 51(DE)**

(74) Vertreter: **Leineweber, Jürgen, Dipl.-Phys.**
**Nagelschmiedshütte 8**
**D-5000 Köln 40(DE)**

(54) **Schauglas für Vakuumapparaturen.**

(57) Die Erfindung betrifft ein Schauglas mit einer transpartenten Scheibe (3) und einem Flansch (2); um eine einfache Herstellung des Schauglases zu ermöglichen, wird vorgeschlagen, daß die Scheibe (3) unmittelbar im Bereich des Flansches (2) angeordnet und zur Herstellung einer vakuumdichten Verbindung von einem O-Ring (4) umgeben ist.

FIG. 2

EP 0 358 851 A2

## Schauglas für Vakuumapparaturen

Die Erfindung bezieht sich auf ein Schauglas mit einer transparenten Scheibe und einem Flansch.

Schaugläser dieser Art können auf ebenfalls mit einem Flansch ausgerüstete Anschlußstutzen einen Vakuumapparatur vakuumdicht aufgesetzt werden und gestatten einen Einblick in den Rezipienten dieser Vakuumapparatur.

Bei einem bekannten Schauglas ist eine Glasscheibe mit einer der beiden Stirnseiten eines Rohrabschnittes verklebt. Die andere Seite des Rohrabschnittes weist den Flansch auf, der der vakuumdichten Befestigung des Schauglases auf dem Flansch des Anschlußstutzen eines Rezipienten dient. Die Herstellung der vakuumdichten Glas/Metall-Klebeverbindung ist bei dieser bekannten Ausführung aufwendig. Weiterhin besteht der Nachteil, daß der Abstand zwischen der Glasscheibe und dem Inneren des Rezipienten infolge des vorhandenen Rohrabschnittes zwischen Scheibe und Flansch relativ groß ist, so daß der Einblickwinkel eingeschränkt wird.

Der vorliegenden Erfindung liegt die Aufgabe zugrunde, ein Schauglas mit einer transparenten Scheibe und einem Flansch zu schaffen, das einfach in seiner Herstellung ist und einen vergrößerten Einblickwinkel in den Rezipienten zuläßt.

Erfindungsgemäß wird diese Aufgabe dadurch gelöst, daß die Scheibe unmittelbar im Bereich des Flansches angeordnet und zur Herstellung einer vakuumdichten Verbindung von einem O-Ring umgeben ist. Bei einer Lösung dieser Art hat der O-Ring nicht nur die Aufgabe, die Dichtwirkung zwischen dem Flansch des Schauglases und dem Flansch des Anschlußstutzens, auf dem das Schauglas befestigt ist, zu erzeugen; der O-Ring hat weiterhin die Aufgabe, den Rand der Glasscheibe nach außen hin abzudichten. Dadurch, daß sich die Glasscheibe im unmittelbaren Bereich des Flansches befindet, ist der Abstand der Scheibe zum Inneren des Rezipienten im Vergleich zum vorbekannten Schauglas reduziert. Weiterhin ist vorteilhaft, daß das Glas leicht austauschbar ist und durch den O-Ring vor Stößen geschützt ist.

Zweckmäßig ist die Dichtfläche des Flansches des Schauglases mit einer inneren Stufe ausgerüstet, deren axial sich erstreckender Abschnitt den O-Ring umfaßt und deren radial sich erstreckendem Abschnitt der O-Ring und der Außenrand der Scheibe aufliegen. Bei dieser Ausführungsform hat der O-Ring dreiseitig Kontakt, und zwar radial nach außen mit dem sich axial erstreckenden Stufenabschnitt, radial nach innen mit dem Außenrand der Scheibe und seitlich mit dem radial sich erstreckenden Stufenabschnitt. Wird dieses Schauglas auf den Flansch eines Rezipienten aufgesetzt, dann hat der O-Ring zusätzlich noch Kontakt mit der Dichtfläche des Gegenflansches. In allen dieser vier Kontaktbereiche kann der O-Ring Dichtfunktionen erfüllen. Eine Klebeverbindung ist nicht mehr erforderlich.

Eine weitere vorteilhafte Maßnahme besteht darin, dem sich etwa axial erstreckenden Abschnitt der Stufe eine konische Form zu geben, die sich von der Dichtfläche des Flansches zum radial sich erstreckenden Abschnitt der Stufe konisch erweitert. In eine in dieser Form ausgebildeten Stufe kann die Scheibe mit Hilfe des O-Ringes klemmend befestigt werden. Diese Maßnahme erleichtert die Handhabung des erfindungsgemäßen Schauglases.

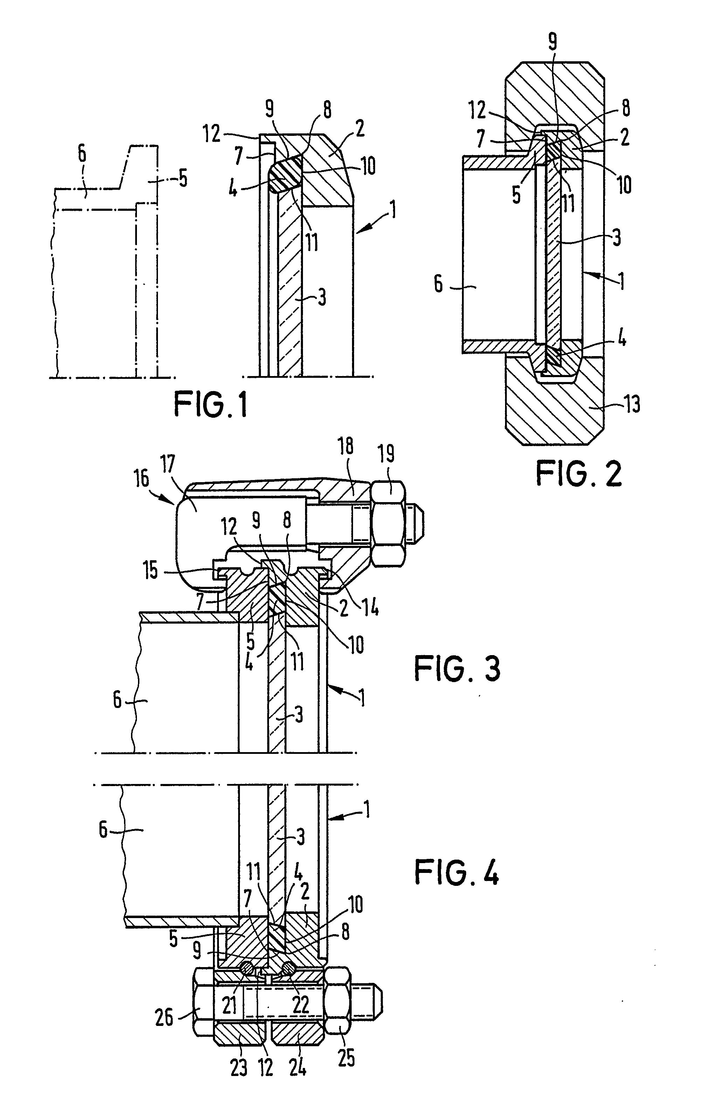

Weitere Vorteile und Einzelheiten der Erfindung sollen anhand von in den Figuren 1 bis 4 dargestellten Ausführungsbeispielen erläutert werden.

Figur 1 zeigt einen Teilschnitt durch das erfindungsgemäße Schauglas 1, das aus dem ringförmigen Flansch 2, der transparenten Scheibe 3 und dem O-Ring 4 (z. B. aus Viton) besteht. Der mit einem (Gegen-) Flansch 5 ausgerüstete Anschlußstutzen, der, z. B. an einem nicht dargestellten Rezipienten befestigt ist, ist mit 6 bezeichnet.

Der Ringflansch 2 des Schauglases 1 weist stirnseitig die Dichtfläche 7 auf. Diese ist mit einer inneren Stufe 8 ausgerüstet, die den sich etwa axial erstreckenden Abschnitt 9 und den sich radial erstreckenden Abschnitt 10 aufweist. Dem Abschnitt 10 liegen der O-Ring 4 und die Scheibe 3 auf. Der O-Ring 4 umgibt die Scheibe 3 und liegt sowohl dem Außenrand der Scheibe 3 als auch dem sich axial erstreckenden Abschnitt 10 der Stufe 8 an.

Die Höhe der Stufe 8, die Dicke der Scheibe 3 und der Durchmesser des O-Ringes 4 sind so gewählt, daß der O-Ring aus der Dichtfläche 7 hervorragt, während die Dicke der Scheibe 3 etwas kleiner ist als die Höhe der Stufe 8. Dadurch wird erreicht, daß der Dichtring beim Aufsetzen auf einen Gegenflansch 5 zusammengepreßt wird, während die Scheibe 3 von axial gerichteten Dichtkräften im wesentlichen freibleibt.

Der sich im wesentlichen axial erstreckende Abschnitt 9 der Stufe 8 hat - wie Figur 1 zeigt - eine konische Form, die sich von der Dichtfläche 7 ausgehend erweitert. Das gleiche trifft für den Außenrand 11 der Scheibe 3 zu. Diese Maßnahmen sichern zum einen eine klemmende Befestigung der Scheibe 3 im Flansch 2, so daß das Schauglas 1 als Einheit handhabbar ist. Weiterhin ist der Dichtring 4 von vier Kontaktflächen umgeben, von denen sich die jeweils paarweise gegenüberliegenden Flächen parallel erstrecken.

Der Dichtring ist dadurch in der Lage im Bereich aller vier Kontaktflächen seine Dichtfunktion zu erfüllen.

Die Dichtfläche 7 ist von einem äußeren Rand 12 umgeben. Dieser hat die Funktion, einen zentrierten Sitz des Schauglases 1 auf dem Gegenflansch 5 zu sichern.

Figur 2 zeigt das Schauglas 1 nach Figur 1, aufgesetzt auf den Flansch 5 des Anschlußstutzens 6. Zur Erzeugung der notwendigen Dichtkraft ist ein mehrgliedriger, vorzugsweise zweigliedriger, Spannring 13 vorgesehen, der die Flansche 2 und 5 umfaßt. In an sich bekannter Weise sind beide Flansche 2 und 5 mit konischen Flächen ausgerüstet, denen ebenfalls konisch gestaltete Flächen des Spannringes 13 aufliegen. Durch ein Zusammenziehen des mehrgliedrigen Spannringes wird die Dichtkraft erzeugt.

Die Figuren 3 und 4 zeigen jeweils ein Schauglas 1 nach der Erfindung mit anderen Flanschkonfigurationen. Beide Flansche 2 und 5 weisen auf den ihren Dichtflächen gegenüberliegenden Seiten einen Außenrand 14 bzw. 15 auf. Beim Ausführungsbeispiel nach Figur 3 umgreifen mehrere, auf dem Umfang verteilt angeordnete Klammerschrauben 16 mit ihren in axialer Richtung relativ zueinander verschiebbaren Teilen 17 und 18 die Ränder 14 und 15. Durch Anziehen der Schrauben 19 wird die axial gerichtete Dichtkraft erzeugt.

Beim Ausführungsbeispiel nach Figur 4 sind die Flansche 2 und 5 von in Nuten angeordneten Klemmringen 21 und 22 umgeben. Auf diesen Klemmringen stützen sich Überwurf-Ringe 23 und 24 ab. Durch Zusammenpressen der Ringe 23 und 24 mittels der Schraube 25 und der Mutter 26 wird die axial gerichtete Dichtkraft erzeugt.

## Ansprüche

1. Schauglas mit einer transparenten Scheibe (3) und einem Flansch (2), dadurch gekennzeichnet, daß die Scheibe (3) unmittelbar im Bereich des Flansches (2) angeordnet und zur Herstellung eines vakuumdichten Verbindung von einem O-Ring (4) umgeben ist.

2. Schauglas nach Anspruch 1, dadurch gekennzeichnet, daß die Dichtfläche (7) des Flansches (2) mit einer inneren Stufe (8) ausgerüstet ist, deren etwa axial sich erstreckender Abschnitt den O-Ring (4) umfaßt und deren radial sich erstreckendem Abschnitt (10) der O-Ring (4) und die Scheibe (3) aufliegen.

3. Schauglas nach Anspruch 2, dadurch gekennzeichnet, daß die Höhe der Stufe (8) etwas größer ist als die Dicke der Scheibe (3).

4. Schauglas nach Anspruch 2 oder 3, dadurch gekennzeichnet, daß die Höhe der Stufe (8), die Dicke der Scheibe (3) und der Durchmesser des O-Ringes (4) so gewählt sind, daß der O-Ring (4) aus der Dichtfläche (7) hervorragt.

5. Schauglas nach Anspruch 2, 3 oder 4, dadurch gekennzeichnet, daß der sich etwa axial erstreckende Abschnitt (9) der Stufe (8) eine sich von der Dichtfläche (7) zum radial sich erstreckenden Abschnitt (10) der Stufe (8) konisch erweiternde Form hat.

6. Schauglas nach Anspruch 5, dadurch gekennzeichnet, daß der Außenrand (11) der Scheibe (3) ebenfalls konisch ausgebildet und der konischen Form des axial sich erstreckenden Abschnittes (9) der Stufe (8) angepaßt ist.

7. Schauglas nach einem der vorhergehenden Ansprüche, dadurch gekennzeichnet, daß die Dichtfläche (7) von einem Zentrierrand (12) umgeben ist.

FIG.1

FIG. 2

FIG. 3

FIG.4

88.018